# EUROPEAN PATENT SPECIFICATION

(11) **EP 4 610 637 B1**
(45) Date of publication and mention of the grant of the patent: **07.10.2026**
(21) Application number: 25190139.3
(22) Date of filing: 10.08.2022
(51) Int. Cl.: G01B 11/30, G01B 11/24, G01B 21/20, G01N 21/952

(54) **METHOD FOR INSPECTING SURFACES AND INTERFACES OF HIGH VOLTAGE CABLE COMPONENTS**
VERFAHREN ZUR PRÜFUNG VON OBERFLÄCHEN UND GRENZFLÄCHEN VON HOCHSPANNUNGSKABELKOMPONENTEN
MÉTHODE D'INSPECTION DES SURFACES ET DES INTERFACES DE COMPOSANTS DE CÂBLES À HAUTE TENSION

(43) Date of publication of application: 03.09.2025
(62) Document number(s) of the earlier application(s) in accordance with Art. 76 EPC: 22306208.4 / 4 321 838
(73) Proprietor: Nexans, 92400 Courbevoie (FR)
(72) Inventor: Doedens, Espen, 1788 Halden (NO); Nes, Endre, 1779 Halden (NO)
(74) Representative: Acapo Onsagers AS

(56) References cited:
- EP-A1- 3 901 571
- CN-B- 106 225 737
- JP-A- 2018 147 803
- US-A1- 2003 079 360
- US-A1- 2021 041 375
- DOEDENS ESPEN ET AL: "Space Charge Accumulation at Material Interfaces in HVDC Cable Insulation Part I-Experimental Study and Charge Injection Hypothesis", ENERGIES, vol. 13, no. 8, 17 April 2020 (2020-04-17), pages 2005, XP055910067, DOI: 10.3390/en13082005

## Description

### Technical field

The present invention relates to high voltage and medium voltage cables, in particular to a method for inspecting surfaces and/or interfaces of high voltage and/or medium voltage cable components.

### Background

A high voltage (HV) and medium voltage (MV) cable is used for electric power transmission at medium and high voltage, e.g. above 1 000 V. Such cables include a conductor and an insulation. The insulation may consist of polymers or polyethylene, including ethylene propylene rubber (EPR) and cross-linked polyethylene (XLPE). At inner and outer sides of the insulation semiconducting layers are fused to the insulation. The semiconducting layers prevent air-filled cavities between the metal conductors and the dielectric so that small electric discharges cannot arise and endanger the insulation material. The insulation is usually also covered by a copper or aluminum wire screen, or a lead or aluminium or copper jacket, or combinations thereof. This metallic screen or jacket is followed by a polymeric (e.g. PE or PVC) outer sheath.

The cables are manufactured in cable manufacturing lines using extrusion. The quality control and meeting product specifications are very important in cable production. A failure due to dielectric breakdown in the HV-cable may cause an outage of power supply. For instance, high voltage cables are used for long length connections for power distribution and power transmission. The manufacturing quality is monitored during the operation of the cable manufacturing line to assure the quality of the final product. The final product is usually an assembly comprising cable lengths connected together as well as connected accessories such as terminations, GIS terminations, asymmetric joints, HV or MV joints, MV terminations, MV plugin terminations, etc.

Insulators and spacers used in HV assemblies, and MV assemblies, such as epoxy insulators, termination housings (possibly with rain sheds), and other insulative spacers providing a mechanical connection between high voltage and ground in HV cable products, are subjected to electric stress. This electric stress can be oriented tangentially, perpendicularly, or a combination thereof, to the surface of such components. Any defects, protrusions, irregularities, on this surface may hamper the long-term electrical performance of the component, by means of localized field enhancement which can result in a flashover from/to the adjacent surfaces or along the surface of the component. The quality control (QC) of such surfaces is thus essential.

HV electrodes, such as toroids, grading rings used on HV components/apparatus as well as electrodes within oil insulated assemblies, or within gas insulated switchgear (GIS) require high quality surface finish, as any protrusions present on the surfaces may initialize local and/or global discharges, which ultimately can lead to failure of the system. Such electrodes can be positioned on HV potential, on floating potential, or ground potential, and thus typically feature electric fields perpendicular to the surface, such that any irregular shape or protrusion can create local field enhancement and thus pose as a weak point.

To control this surface finish is a costly and time staking process; and for many of the such electrodes there is lacking a fast, accurate, cost efficient quality control procedure that ensures the surface finish and geometry is according to the specifications.

Electrodes used within gas or oil filled HV cable components/apparatus'/accessories require high quality surface finish, as any higher levels of surface roughness may reduce the electrical performance and the electrical durability of the system. Such electrodes can be positioned on HV potential, on floating potential, or ground potential, and thus typically feature electric field perpendicular to the surface, such that any roughness can create local field enhancement several places at all rough asperities, which reduces electrical performance through higher leakage currents and lowered breakdown strength.

To control this surface finish, when parts are machined and supplied from external vendors, is very important, ensuring that (often in drawings) specified levels of surface smoothness are met by the parts manufacturer.

Traditional quality control of roughness levels on the surface of such electrode parts comprises using 2d mechanical stylus roughness measurements, as scientific publications showing correlation between currents and measured 2d roughness measurement results exist.

While 2d stylus measurements can assess roughness levels, optical profilometry provides more accurate, higher resolution results in three dimensions.

Traditional quality control in the High voltage industry involves inspection by the human eye, which does not represent a fool-proof solution. Other may include some form of electrical testing requiring HV energization of the component, such as PD testing.

EP3901571 discloses a system and a method for determining a quality of a surface of a high voltage cable end using a 3D scanner. The method comprises moving a non-contact surface scanner about the cable end, measuring distance to the surface over the area of the surface by sequentially measuring a plurality of sub-areas of the area of the surface, creating a continuous 3D surface geometry measurement of the surface of the cable end and comparing, using the continuous 3D surface geometry measurement with at least one surface geometry acceptance threshold determining the quality of the surface of the high voltage cable end.

US 2003/079360 A1 describes a device for use as a navigation link when measuring objects.

A further related situation is that extrusion equipment, such as screws, dies, matrices, etc. experiences wear during its operational lifetime and thus requires maintenance from time to time. Before and after the maintenance, generally two parts of the equipment needs to be assessed:
- Surface finish (micro-geometric state)
- Overall dimensions such as warping, small missing pices, larger geometric defects etc.

Tracking such wear and assessing the quality of the equipment after the repair session of the complex geometrical shapes, over multiple maintenance sessions during the lifetime of the components can be challenging.

Traditionally, visual inspection is typically performed manually by the operators. Also, photographs can be taken, for immediate inspection and for later reference. No off-the-shelf digital inspection tools exists for extrusion equipment

The object of the invention is to provide a method and system for inspecting surfaces and/or interfaces of cable components of HV and MV cables, such as electrodes, insulators and spacers.

The object of the invention is achieved by means of the patent claims.

**In** the exemplary embodiments, various features and details are shown in combination. The fact that several features are described with reference to a particular example should not be construed as implying that those features be necessity have to be included together in all the embodiments of the invention.

Conversely, features that are described with reference to different embodiments should not be construed as mutually exclusive. As those skilled in the art will readily understand, embodiments that incorporate any subset of features described herein and that are not expressly interdependent have been contemplated by the inventor and are part of the intended disclosure. However, explicit descriptions of all such embodiments would not contribute to the understanding of the principles of the invention, and consequently some permutations have been omitted for the sake of simplicity.

The term "surface" can in the context of this description mean any surface of a HV insulator, such as epoxy insulators/spacers used in GIS systems, rain sheds on outside of the outdoor sealing end(termination), or the inside of the termination.

"Surface" can also mean the surface of any HV electrode, such as electrode parts used in air, oil or gas on positions in or close to the HV apparatus where the surface of the electrode is subjected to high field strength.

Insulative parts normally have two surfaces ("inner" and "outer"), which are subjected to high field strength along and across the surface. The purpose is thus to scan the entire component for inspection. Next step is to run a post-processing algorithm on the scanned data that detects and highlights any irregularities such that a go/no go criteria, as well as an inspection report can be generated. The post-processing algorithm can be designed to determine the orientation of the defects with respect to the tangential field stress. Then the scanned data for the full life-cycle of the product/part can be stored, enabling also its use in physics based digital twin models.

During scanning of smooth surfaces, 3D markers and/or talc spray is often used on the surface during the scanning process, respectively to provide accurate positioning and to minimize glaring. The 3D markers are used for the scanner to keep track of its angle and position in relation to the object to be measured, and they are particular important when the object to be scanned is geometrically featureless, such as a High Voltage (HV) cable, cable joint or cable end. When scanning HV cables, these 3D markers shield measurement data located underneath these 3D markers, which can lead to an incomplete surface inspection which can cause missing defects/deviations underneath the markers. Moreover, for the scanning of HV cable ends, 3D marker (stickers) may leave glue residue on the surface, which can lead to poor electrical performance of the apparatus afterwards.

This is not ideal and there is thus a need for strategies to avoid this.

Examples of such strategies are:
- Use of a scanner with blue laser technology not requiring talc spray.
- Using sticky or magnetic 3D markers which positions on the surface are shifted halfway during the process so the data underneath these markers can be included in the inspection. Embodiments in which a plurality of markers are positioned on the surface do not form part of the claimed invention, but are included as background art that is useful for understanding the invention.
- Using a 3D scanner that uses an external camera and 3D markers on the scanner itself to obtain the scanner position in relation to the test object without 3D markers on the surface.
- Using specialized 3D marker JIGs that mount the markers, positioned close to the surface but not on it.

Such a 3D marker fixture or JIG can be arranged around the HV cable. A 3D marker fixture/jig should comply with at least some of the following objects:
- Have enough mechanical strength so there is minimal movement between the structure, the markers, and the cable or cable sample arranged in it, as any motion during the scanning would interfere on data quality.
- Comprise enough markers and an optimal spread between the markers to ensure that multiple markers are always visible from all angles. This minimizes the chance of losing the scanner's position in relation to the object.
- Ensure an optimal distance between markers and surface underneath so both appear within range and line of sight for cable diameters within 30-170 mm.
- Have a black matte surface appearance at the surface of the fixture to minimize glaring.
- Comprise flat faces for fastening the markers. This ensures secure fastening and to avoid double detection that can occur if a marker is bent and thus is interpreted as more than one marker.
- Have maximal through-visibility for the scanner optics (which for example detects from 2 angle-offset lenses) to detect a laser pattern projected on the surface within the fixture.

According to the invention, a method for inspecting surfaces and/or interfaces of high voltage and/or medium voltage cable components, is defined, the method comprising:
a) capture and store a set of 3-dimensional, 3D, surface geometry measurement data of an area of interest of a surface of the cable component by moving a 3D surface scanner about the cable over the area of interest, wherein a fixture is arranged around the cable for capturing the 3D surface geometry measurement data, said fixture comprising 3D markers, and wherein the fixture comprises support elements for holding the surface of the cable in place relative to the fixture;
b) inspect the captured 3D surface geometry measurement data from step a) to determine smoothness of the surface scanned by the 3D surface scanner, and
c) compare the smoothness with threshold data to provide a quality report for the surface scanned by the 3D surface scanner.

The area of interest can be the surface of a sub-part of the cable component before assembling the cable component, and/or any surface as defined above.

The inspection performed in step b) can comprise measuring the roughness of the scanned surface, measuring irregularities comprised in the scanned surface, or other characteristics of a surface that can be of interest.

The 3D surface geometry measurement data can be represented by a data point cloud, ie. a collection of data points which can be further processed to provide a representation of the cable component.

In some embodiments, step a) can be repeated, providing several sets of 3D surface geometry measurements. The sets of 3D surface geometry measurements from each repeated step can then be merged to obtain a full 3D map of the damaged section of the cable.

In one configuration the method comprises identifying differences between the area of interest of the surface of the cable component and a 3D drawing of the area of interest of the surface of the cable component by comparing the 3D surface geometry measurement data of the area of interest with the 3D drawing of the area of interest and mark the differences in the 3D surface geometry measurement data to produce a deviation map.

There may be provided a system for inspecting surfaces and/or interfaces of high voltage and/or medium voltage cable components. The system according to the invention is defined in claim 10.

In an example, in addition to or alternatively to the above described methods and systems, a portable or lab based optical profilometer can be used to scan surfaces, such as an electrode surface. Using an optical profilometer can provide micrometric or nanometric X,Y,Z datapoints of a few, millimeter, or possibly as low as 0.1 um sized measurement domain sections on metallic electrodes received from parts manufacturers. Thereafter, the data is post-processed digitally, and roughness parameters can be computed. Based on the roughness parameters and/or further computations made on the data, a go/no go criteria is created for the part in question, as well as a quality verification report.

In one example, there is provided a method for inspecting surfaces of parts and/or equipment for manufacture of high voltage and/or medium voltage cable components which comprises the following steps:
a) capture and store a set of 3-dimensional (3D) surface geometry measurement data of an area of interest of a surface of the cable component by moving a 3D surface scanner over over the area of interest,
b) compare the captured 3D surface geometry measurement data from step a) with a previously stored set of 3D surface geometry measurement data or a 3D drawing of the part, and
c) record any differences in a quality report for the inspected surface.

In one embodiment the method comprises marking the differences in the 3D surface geometry measurement to produce a deviation map and/or storing the scanned data for the next time the part is to be serviced.

The invention will now be described in more detail by means of examples and with reference to the figures.
Fig. 1 illustrates an example of a 3D surface geometry measurement of a surface of a cable.
Fig. 2 illustrates a high volt cable end.
Fig. 3 illustrates an example of an epoxy insulator.
Fig. 4 illustrates an example of an HV electrode within a GIS system.
Fig. 5 illustrates an optical profilometer.
Figure 6 illustrates an example of a height map resulting from an optical profilometer scan
Figure 7 a and 7b illustrates examples of a fixture/jig 70, 71 for providing positioning markers

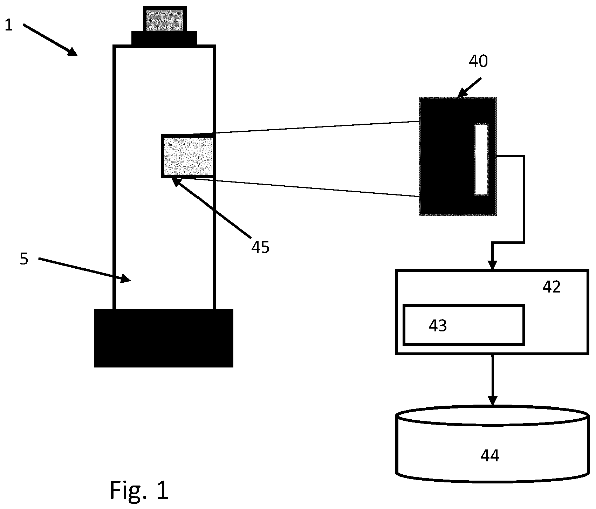

Fig. 1 is a schematic illustration of a system according to the present invention for scanning the surface 5 and/or interfaces of high voltage and/or medium voltage cable components, in this example a cable end 1. The sizes of various object of the illustration are not in scale. The system comprises a non-contact surface scanner 40. The non-contact surface scanner 40 is directable to an area of interest 45.

In one embodiment, the non-contact surface scanner 40 may be a 3D laser scanner. The scanner may also be other types of non-contact surface scanners, for example white line scanners using projected white lines able to project up to 1,500,000 measurements/s and/or 99 white light scanning lines, or other kinds of suitable scanners.

The non-contact surface scanner 40 is arranged to measure the distance to the surface 5 of the area of interest. In the example in the figure, the field-of-view of the non-contact surface scanner corresponds to the area of interest, but the area of interest 45 on the surface 5 may be larger or smaller by the field-of-view or scanning area of the non-contact surface scanner 40. The field-of-view may be round, rectangular, linear or any other shape as determined by the non-contact surface scanner. The non-contact surface scanner 40 is movable around the cable 1 such that the surface 5 of the cable 1 is covered by a plurality of sub-areas in order to ensure that the entire area of interest is scanned. The size of plurality of sub-areas may vary, for example by varying the distance between the non-contact surface scanner 40 and the cable 1. In one embodiment the non-contact surface scanner 40 is freely movable in any direction around the cable 1, such as a handheld 3D laser scanner.

The non-contact surface scanner 40 should know its position and direction in 3D space, for example by recognizing a plurality of markers (not shown) positioned on the surface 5. Embodiments in which a plurality of markers are positioned on the surface do not form part of the claimed invention, but are included as background art that is useful for understanding the invention. The markers may be stickers or sterile clamps with specific patterns or markers thereon. The markers will result in "NaN" (not a number = empty) areas underneath them, however, the scan can be paused, markers/clamps relocated and then the measurement can also scan the area under the markers. Alternatively, the empty areas may be filled in with interpolated data, where the interpolation is based on nearby data.

The illustrated system also comprises an analysis part 42. The analysis part 42 is in communication with the non-contact surface scanner 40 over a wired or wireless communication link. In one embodiment, at least parts of the analysis part 42 may be comprised in the non-contact surface scanner 40. The analysis part 42 comprises a processor 43 adapted to process measurement data from the non-contact surface scanner 40 for each of the plurality of sub-areas to create a 3D surface geometry measurement of the area of interest 45, and thus the surface to be evaluated. The 3D surface geometry measurement can be processed to evaluate the characteristics of the surface and can also create an image of the surface for evaluation and for later reference.

In one embodiment, the analysis part can provide a go/no go evaluation. **In** this way an operator may receive a go or a no go message after the scan is performed, allowing or disallowing the operator to proceed with the cable part.

The criterium for providing a go/no go evaluation may be based on a selection of criterions. The criterions can be selected depending on the type of cable part to be scanned, the type of non-contact scanner used and the purpose of the scan. Examples of criterions are: a height variation threshold, a surface derivative threshold, a peeling wave threshold and/or at least one of an area of a cut, a depth of a cut, and a slope of a cut.

For laser scanners, criterions can comprise macro-geometric control, alignment and object bend, flatness, slope/macro-derivate, macro-height/indentation, ovality, size, larger Steps.

For optical profilometry, criterions can comprise derivatives, height, roughness parameters and/or local computed field enhancement factor (FEF).

Further criterions may be employed after further processing of the 3D surface geometry measurement data. Further processing can for example be levelling and sorting the data. Examples of further criterions are local derivatives, local indentation and noise level.

The analysis unit can use the above to identify the worst regions of the area of interest, such as deeper cuts, nicks, scratches, steps, for example by means of finite element method (FEM). The method can calculate local computed FEF and local computed partial discharge inception voltage (PDIV).

In one embodiment, the analysis part 42 is adapted to transmit the 3D surface geometry measurement to a storage device 44 as a 3D topographic map of the area of interest 45. The analysis part 42 is in communication with the storage device 44 over a wired or wireless communication link. The storage device 44 may be on on-premise server or cloud server. The 3D topographic map of the surface 5 of the cable 1 on the server 44 may be accessible to users and clients for future reference of the cable system.

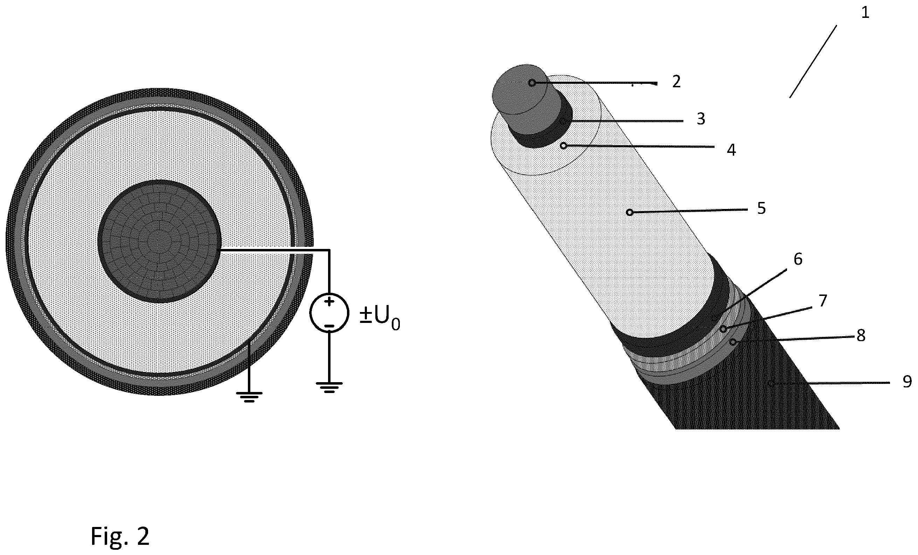

Figure 2 illustrates a detailed view of a high voltage cable end and thus also the composition of a high voltage cable. As shown is an exemplary high voltage cable end 1. The outer sheath 9, the lead sheath 8, swelling tapes 7 and the outer semiconducting screen 6 have been removed at the end, leaving the conductor 2, the inner semiconducting screen 3 and the insulation 4. The surface 5 of the insulation 4 can be inspected to ensure that there are no irregularities, before a high voltage cable accessory component, such as high voltage joint, termination for the cable, or a rubber joint, is slipped over it.

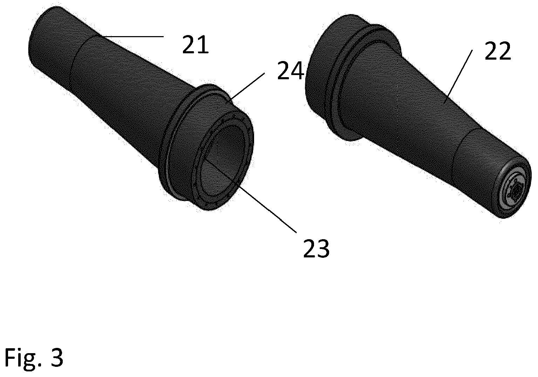

Figure 3 illustrates an example of a high voltage epoxy insulator. A 3D scan can be performed by employing a 3D laser scanner or other non-contact scanner to determine the geometry of the high voltage cable insulator, for example to compare with acceptable tolerances for different parts and deviations therefrom. The scanned 3D geometry can be compared to a 3D drawing of the cable part of interest to evaluate the compliance or to reveal if the deviations are too large to accept, thus providing basis for a go/no go evaluation. For epoxy insulators, the inner surface 23, outer surface 21, 22 various intermediate parts 24 and components of the parts that connect between the high voltage and ground on the component can be scanned. The accuracy of the scan may be 0.025 mm however not limited to the same.

The figure shows an epoxy insulator with dimensions 1,5mxØ0.6m, which for example is used in a 420kVAC or up to 525 kVDC GIS system. The surfaces to be scanned encompass the inner and outer surfaces of the epoxy parts that connect between HV and ground in this component. However, the same method can be used for other molded insulative spacers within GIS or oil filled cable accessory assemblies, insulative tubes (with our without rain sheds) used to house the outdoor terminations, or other insulative spacers in oil, air, and GIS environments.

The scan may be performed on the inner surface 23 and outer surface 21, 22 separately. For example, to begin with scan may be performed on the inner surfaces 23. The 3D laser scanner can project a hatched laser pattern onto the inner surface of the epoxy insulator, for example by rotating the insulator and ensuring the entire insulator surface inside is scanned and covered by the scanner. If the scanner is a handheld device, the scanner itself can be moved to cover the entire surface.

In the second step, a scan may be performed on the outer surface 21, 22 of the insulator. During this procedure, similar to the scan of the inner surface, the insulator or the scanner may be rotated and adjusted to ensure the entire outer surface 21 is covered by the scan.

Next step is to run a post-processing algorithm on the scanned data that detects and highlights any irregularities such that a go/no go criteria, as well as an inspection report can be generated. This can be performed by means of a processor, for example the analysis part 42 described in figure 1, which is adapted to provide a 3D surface geometry measurement which can be transmitted to a storage device 44 as a 3D topographic map. The 3D topographic map of the surface 5 of the cable 1 on the server 44 may be accessible to users and clients for future reference of the cable system.

In case of a no-go criteria being detected, the insulator may be post processed, for example by sanding and/or polishing the surface with irregularities to provide an acceptable surface.

The post-processing algorithm can be designed to determine the orientation of the defects with respect to the tangential field stress. Then the scanned data for the full life-cycle of the product/part can be stored, enabling also its use in physics based digital twin models.

The scanned data can further be compared to drawings in order to evaluate if the insulators are according to the specifications, and can be compared to previous scannings to evaluate degree of wear and to learn how prolonged use influences the insulators.

A similar approach can be done for other kinds of objects, parts and equipment. As described earlier, tracking wear and monitoring quality over time of equipment such as screws, dies, matrices, etc., have been challenging. Such items can thus be scanned as described above and a 3D surface geometry measurement can be achieved. The 3D surface geometry can be transported to a 3D topographic map of the surface of the equipment under inspection. The 3D measurement data can then be analyzed to detect wear or faults on the surface of the equipment/part. The analysis can comprise:
- Comparing the entire geometry of the inspected part against a previously performed scan or a 3D drawing of the part under inspection, to distinguish any change in geometric shape.
- To run an algorithm that may detect smaller defects and perform quality control on this automatically
- To compare the scan data before and after a service operation on the part in question, tracking the improvement of surface and geometric quality, as well as detecting the degree of material removal during this process.
- To store the scanned data for the next time the part is to be serviced.

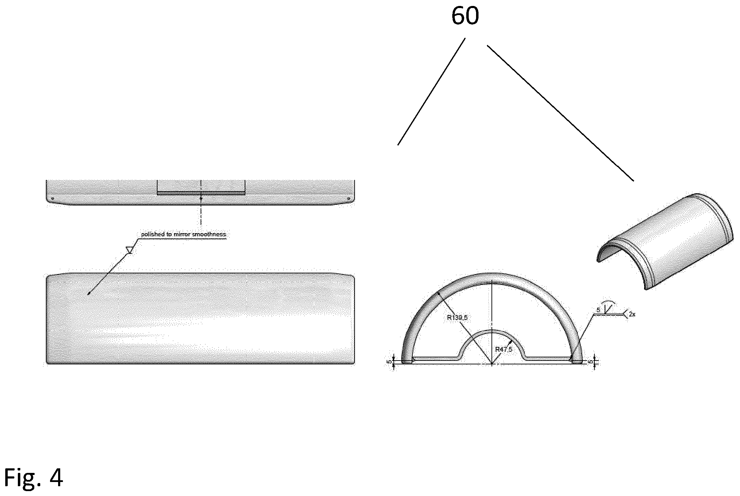

Figure 4 illustrates an example of an HV electrode 60 within a GIS system. Such electrodes can be used within gas or oil filled HV cable components/apparatuses/accessories and require high quality surface finish, as any higher levels of surface roughness may reduce the electrical performance and the electrical durability of the system.

HV electrodes typically feature an electric field perpendicular to the surface, such that any roughness can create local fields several places along the surface, which reduces electrical performance through higher leakage currents and lowered breakdown strength for the electrodes.

To control this surface finish, for example for parts that are supplied from external vendors, it is important to ensure that specified levels of surface smoothness are met. This can be done by scanning the surfaces as described above, and then compare the scanned data with the drawings and specifications provided by the parts manufacturer. The comparison can reveal if the surfaces deviate from the specifications and provide a go/no go criterium and/or trigger an action to improve the surface or replace the electrode.

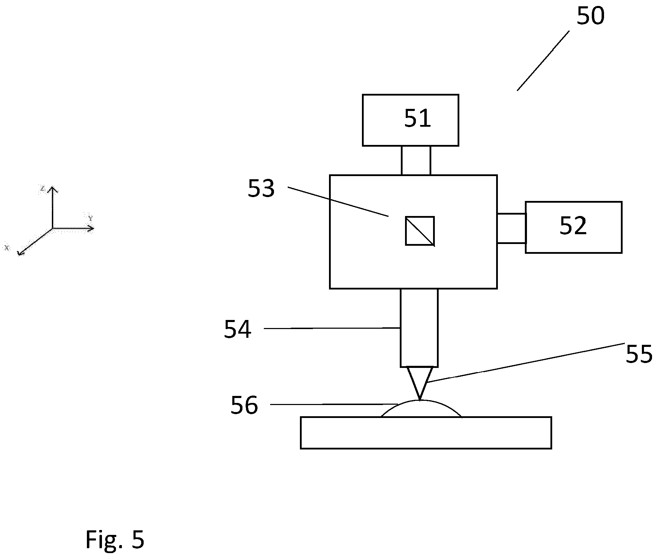

Figure 5 illustrates an optical profilometer 50. Optical profilometers, also called optical surface profilers, are optical non-contact instruments for precisely measuring surface profiles. Essentially, they measure the surface elevation z as a function of lateral coordinates x and y over some area. An optical profilometer comprises a light source 51which is split into two paths by a beam splitter 53. One path directs the light through a lens 54, as light 55, onto the surface 56 under test, the other path directs the light to a detector 52. Reflections from the two surfaces are recombined on the array detector 52. When the path difference between the recombined beams is on the order of a few wavelengths of light or less interference can occur. This interference contains information about the surface contours of the test surface. Vertical resolution can be on the order of several angstroms while lateral resolution depends upon the objective and is typically in the range of 0.3-8 microns.

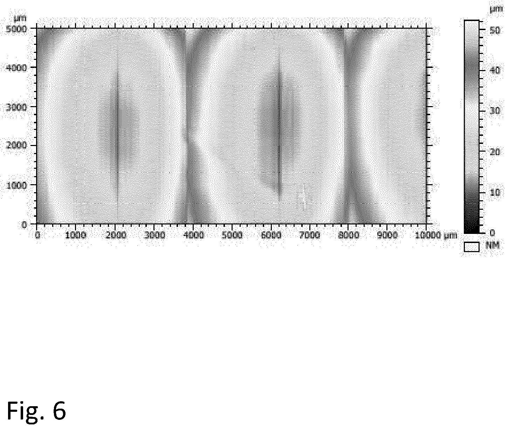

Figure 6 illustrates an example of a height map resulting from an optical profilometer scan of a 5x10 mm scanning section. The data can then be processed digitally to calculate roughness parameters. Based on the roughness parameters, and possible further processing parameters, a go/no go criteria can be created, as well as a quality verification report.

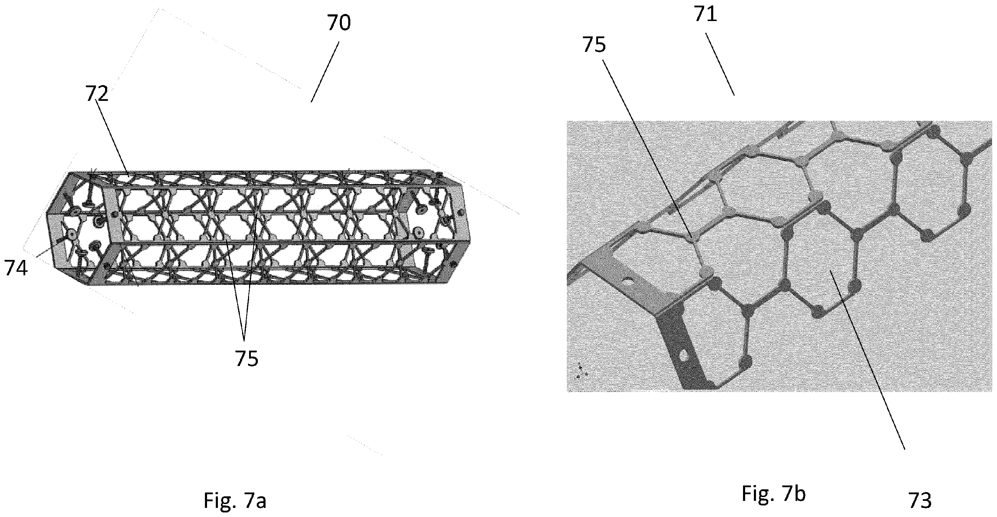

Figure 7 a and 7b illustrates examples of a fixture/jig 70, 71 for providing positioning markers used during capture of 3-dimensional (3D) surface geometry measurement data of an area of interest of a surface of the cable or cable component by moving a 3D surface scanner about the cable over the area of interest. As described above, rather than placing markers on the surface itself, there is provided, according, to the invention, a fixture as claimed in claims 1 and 10.

In the examples illustrated in figures 7a and 7b, the fixtures 70, 71 is designed to comprise a lattice of hexagonal structures 72, 73 that forms a tube-like structure that can be arranged around the surface to be scanned. In the example of figure 7a, the fixture comprises six faces where each face comprises a row of hexagons 72. The markers are arranged at fastening surfaces 75 arranged at the corners of the hexagons. This ensures that there are enough markers and an optimal spread between the markers which leads to there being multiple markers always visible from all angles, which minimizes the chance of losing the scanners position in relation to the object, which can negatively impact data quality. The flat faces of the markers also allow for easily placing clipping planes during the scanning session, which allow for automatic deletion of scanning data on the fixture itself. This also enables the option to use a pre-scanned markers, where the clipping plane contains files specific for the fixture itself allowing for rapid set-up time.

Other arrangements of the lattice are also possible, such as other close-packing atomically-inspired patterns, for example triangular, cubic, pentagon, or random patterns.

The surface to be scanned, for example the surface of an electrode or other cable part, cable component or accessory, is arranged inside the fixture 70 and held in place by means of support elements 74. The support elements 74 are in this embodiment arranged at both ends of the fixture 70, but in other embodiments, there may be more or fewer support elements. The support elements 74 in this example are arranged as pins extending inwards and having a support face at the far end of the pin. The support face can contact the cable part to be scanned. The pins can be adjusted to ensure optimal distance between markers and the surface in the fixture, so both appear within range and line of sight for the scanner.

In this example, there are arranged six support elements 74, each extending from one of the faces forming the fixture. In this way, the cable part will be securely fixed in the fixture, thus minimizing movement between the structure, the markers, and the cable part in it. This is an important feature, as any such motion during the scanning would seriously hamper data quality. In other embodiments there may be arranged more or less than six support elements, in each case adapted to the requirements for each specific use.

The support elements may be arranged with each having the same length reaching from the point connecting them to the fixture to the far end. Other arrangements may be used, which ensures that the cable part is centered in the fixture.

The fixture can be embodied with a black matte surface appearance on the fixture to minimize glaring.

## Claims

1. A method for inspecting surfaces and/or interfaces of high voltage and/or medium voltage cable components, comprising:
a) capture and store a set of 3-dimensional, 3D, surface geometry measurement data of an area of interest of a surface of the cable component by moving a 3D surface scanner (40) about the cable over the area of interest, wherein a fixture is arranged around the cable for capturing the 3D surface geometry measurement data, said fixture comprising 3D markers, and wherein the fixture comprises support elements for holding the surface of the cable in place relative to the fixture;
b) inspect the captured 3D surface geometry measurement data from step a) to determine smoothness of the surface scanned by the 3D surface scanner, and
c) compare the smoothness with threshold data to provide a quality report for the surface scanned by the 3D surface scanner.

2. The method according to claim 1, where the 3D surface geometry measurement data are represented by a data point cloud, where data points in the data point cloud can be further processed to provide a representation of the cable component.

3. The method according to claim 1 or 2, comprising repeating step a) and where the sets of 3D surface geometry measurement data from each repeated step are merged to obtain a full 3D map of a damaged section of the cable component.

4. The method according to one of the previous claims, where the inspection comprises at least one of measuring a roughness of the surface scanned by the 3D surface scanner .
or measuring irregularities comprised in the surface scanned by the 3D surface scanner.

5. The method according to one of the previous claims, where the area of interest is the surface of a sub-part of the cable component before assembling the cable component.

6. The method according to one of the previous claims, comprising identifying differences between the area of interest of a surface of the cable component and a 3D drawing of the area of interest of the surface of the cable component by comparing the 3D surface geometry measurement data of the area of interest with the 3D drawing of the area of interest and marking the differences in the 3D surface geometry measurement data to produce a deviation map.

7. The method according to any one of the preceding claims, wherein the fixture has a black matte surface appearance.

8. The method according to any one of the preceding claims, wherein the fixture comprises flat faces for fastening the 3D markers.

9. The method according to any one of the preceding claims, wherein the 3D markers have flat faces.

10. A system for inspecting surfaces and/or interfaces of high voltage and/or medium voltage cable components, the system comprising:
- a non-contact surface scanner (40), for capturing at least one set of continuous 3D surface geometry measurement data of an area of interest (45) of the cable component by moving the non-contact surface scanner over the area of interest,
- a memory unit (44) for storing multiple 3D surface geometry measurement data of the area of interest,
- a processor (43) connected to the non-contact surface scanner, configured to inspect the captured 3D surface geometry measurement data to determine smoothness of the surface scanned by the surface scanner, and
compare the smoothness with threshold data to provide a quality report for the surface scanned by the surface scanner, and
- a fixture for arranging around the cable, said fixture comprising 3D markers, and wherein the fixture comprises support elements for holding the surface of the cable in place relative to the fixture.

11. The system according to claim 10, where a number of sets of 3D surface geometry measurement data are merged to obtain a full 3D map of a damaged section of the cable component.

12. The system according to claims 10 or 11, where the inspecting comprises measuring the roughness of the surface scanned by the surface scanner.

13. The system according to one of the claims 10 to 12, where the inspecting comprises measuring irregularities comprised in the surface scanned by the surface scanner.

## Patentansprüche

1. Verfahren zur Prüfung von Oberflächen und/oder Grenzflächen von Hochspannungs- und/oder Mittelspannungskabelkomponenten, umfassend:
a) Erfassen und Speichern eines Satzes von 3-dimensionalen Oberflächengeometriemessdaten, 3D-Oberflächengeometriemessdaten, eines Bereichs von Interesse einer Oberfläche der Kabelkomponente, indem ein 3D-Oberflächenscanner (40) um das Kabel über den Bereich von Interesse bewegt wird, wobei eine Halterung um das Kabel herum angeordnet ist, um die 3D-Oberflächengeometriemessdaten zu erfassen, wobei die Halterung 3D-Marker umfasst, und wobei die Halterung Stützelemente umfasst, um die Oberfläche des Kabels relativ zu der Halterung in Position zu halten;
b) Prüfen der erfassten 3D-Oberflächengeometriemessdaten aus Schritt a), um die Glätte der durch den 3D-Oberflächenscanner abgetasteten Oberfläche zu bestimmen, und
c) Vergleichen der Glätte mit Schwellendaten, um einen Qualitätsbericht für die durch den 3D-Oberflächenscanner abgetastete Oberfläche bereitzustellen.

2. Verfahren nach Anspruch 1, wobei die 3D-Oberflächengeometriemessdaten durch eine Datenpunktwolke dargestellt sind, wobei Datenpunkte in der Datenpunktwolke weiterverarbeitet werden können, um eine Darstellung der Kabelkomponente bereitzustellen.

3. Verfahren nach Anspruch 1 oder 2, umfassend Wiederholen von Schritt a) und wobei die Sätze von 3D-Oberflächengeometriemessdaten von jedem wiederholten Schritt zusammengeführt werden, um eine vollständige 3D-Karte eines beschädigten Abschnitts der Kabelkomponente zu erlangen.

4. Verfahren nach einem der vorhergehenden Ansprüche, wobei die Prüfung mindestens eines von Messen einer Rauheit der durch den 3D-Oberflächenscanner abgetasteten Oberfläche umfasst .
oder Messen von Unregelmäßigkeiten, die in der durch den 3D-Oberflächenscanner abgetasteten Oberfläche umfasst sind.

5. Verfahren nach einem der vorhergehenden Ansprüche, wobei der Bereich von Interesse die Oberfläche eines Unterteils der Kabelkomponente vor dem Zusammenbauen der Kabelkomponente ist.

6. Verfahren nach einem der vorhergehenden Ansprüche, umfassend Identifizieren von Unterschieden zwischen dem Bereich von Interesse einer Oberfläche der Kabelkomponente und einer 3D-Zeichnung des Bereichs von Interesse der Oberfläche der Kabelkomponente durch Vergleichen der 3D-Oberflächengeometriemessdaten des Bereichs von Interesse mit der 3D-Zeichnung des Bereichs von Interesse und Markieren der Unterschiede in den 3D-Oberflächengeometriemessdaten, um eine Abweichungskarte zu erzeugen.

7. Verfahren nach einem der vorhergehenden Ansprüche, wobei die Halterung ein schwarzes mattes Oberflächenaussehen aufweist.

8. Verfahren nach einem der vorhergehenden Ansprüche, wobei die Halterung flache Flächen zum Befestigen der 3D-Marker umfasst.

9. Verfahren nach einem der vorhergehenden Ansprüche, wobei die 3D-Marker flache Flächen aufweisen.

10. System zum Prüfen von Oberflächen und/oder Grenzflächen von Hochspannungs- und/oder Mittelspannungskabelkomponenten, wobei das System Folgendes umfasst:
- einen berührungslosen Oberflächenscanner (40) zum Erfassen mindestens eines Satzes von kontinuierlichen 3D-Oberflächengeometriemessdaten eines Bereichs von Interesse (45) der Kabelkomponente, indem der berührungslose Oberflächenscanner über den Bereich von Interesse bewegt wird, - eine Speichereinheit (44) zum Speichern mehrerer 3D-Oberflächengeometriemessdaten des Bereichs von Interesse,
- einen Prozessor (43), der mit dem berührungslosen Oberflächenscanner verbunden ist und dazu konfiguriert ist, die erfassten 3D-Oberflächengeometriemessdaten zu prüfen, um eine Glätte der durch den Oberflächenscanner abgetasteten Oberfläche zu bestimmen und die Glätte mit Schwellendaten zu vergleichen, um einen Qualitätsbericht für die durch den Oberflächenscanner abgetastete Oberfläche bereitzustellen, und
- eine Halterung zum Anordnen um das Kabel herum, wobei die Halterung 3D-Marker umfasst, und wobei die Halterung Stützelemente umfasst, um die Oberfläche des Kabels relativ zu der Halterung in Position zu halten.

11. System nach Anspruch 10, wobei eine Anzahl von Sätzen von 3D-Oberflächengeometriemessdaten zusammengeführt werden, um eine vollständige 3D-Karte eines beschädigten Abschnitts der Kabelkomponente zu erlangen.

12. System nach Anspruch 10 oder 11, wobei das Prüfen Messen der Rauheit der durch den Oberflächenscanner abgetasteten Oberfläche umfasst.

13. System nach einem der Ansprüche 10 bis 12, wobei das Prüfen Messen von Unregelmäßigkeiten umfasst, die in der durch den Oberflächenscanner abgetasteten Oberfläche umfasst sind.

## Revendications

1. Méthode d'inspection de surfaces et/ou d'interfaces de composants de câbles à haute tension et/ou à moyenne tension, comprenant :
a) la capture et le stockage d'un ensemble de données de mesure de géométrie de surface tridimensionnelle, 3D, d'une zone d'intérêt d'une surface du composant de câble en déplaçant un scanner de surface 3D (40) autour du câble sur la zone d'intérêt, un dispositif de fixation étant disposé autour du câble de manière à capturer les données de mesure de géométrie de surface 3D, ledit dispositif de fixation comprenant des repères 3D, et ledit dispositif de fixation comprenant des éléments de support destinés à maintenir la surface du câble en place par rapport au dispositif de fixation ;
b) l'inspection des données de mesure de géométrie de surface 3D capturées à l'étape a) pour déterminer un lissé de la surface balayée par le scanner de surface 3D, et
c) la comparaison du lissé à des données de seuil pour fournir un rapport de qualité pour la surface balayée par le scanner de surface 3D.

2. Méthode selon la revendication 1, lesdites données de mesure de géométrie de surface 3D étant représentées par un nuage de points de données, lesdits points de données dans le nuage de points de données pouvant être traités davantage de manière à fournir une représentation du composant de câble.

3. Méthode selon la revendication 1 ou 2, comprenant la répétition de l'étape a) et lesdits ensembles de données de mesure de géométrie de surface 3D de chaque étape répétée étant fusionnés de manière à obtenir une carte 3D complète d'une section endommagée du composant de câble.

4. Méthode selon l'une des revendications précédentes, ladite inspection comprenant au moins une mesure parmi la mesure de la rugosité de la surface balayée par le scanner de surface 3D ou la mesure des aspérités comprises dans la surface balayée par le scanner de surface 3D.

5. Méthode selon l'une des revendications précédentes, ladite zone d'intérêt étant la surface d'une sous-partie du composant de câble avant l'assemblage du composant de câble.

6. Méthode selon l'une des revendications précédentes, comprenant l'identification de différences entre la zone d'intérêt d'une surface du composant de câble et un dessin 3D de la zone d'intérêt de la surface du composant de câble en comparant les données de mesure de géométrie de surface 3D de la zone d'intérêt au dessin 3D de la zone d'intérêt et en marquant les différences dans les données de mesure de géométrie de surface 3D pour produire une carte d'écart.

7. Méthode selon l'une quelconque des revendications précédentes, ledit dispositif de fixation ayant l'aspect d'une surface mate noir.

8. Méthode selon l'une quelconque des revendications précédentes, ledit dispositif de fixation comprenant des faces plates destinées à fixer les repères 3D.

9. Méthode selon l'une quelconque des revendications précédentes, lesdits repères 3D possédant des faces plates.

10. Système d'inspection de surfaces et/ou d'interfaces de composants de câbles à haute tension et/ou à moyenne tension, le système comprenant :
- un scanner de surface sans contact (40), permettant de capturer au moins un ensemble de données de mesure de géométrie de surface 3D continues d'une zone d'intérêt (45) du composant de câble en déplaçant le scanner de surface sans contact au-dessus de la zone d'intérêt,
- une unité de mémoire (44) permettant de stocker plusieurs données de mesure de géométrie de surface 3D de la zone d'intérêt,
- un processeur (43) connecté au scanner de surface sans contact, configuré pour inspecter les données de mesure de géométrie de surface 3D capturées pour déterminer un lissé de la surface balayée par le scanner de surface, et comparer le lissé à des données de seuil pour fournir un rapport de qualité pour la surface balayée par le scanner de surface, et
- un dispositif de fixation destiné à être disposé autour du câble, ledit dispositif de fixation comprenant des repères 3D, et ledit dispositif de fixation comprenant des éléments de support destinés à maintenir la surface du câble en place par rapport au dispositif de fixation.

11. Système selon la revendication 10, un certain nombre d'ensembles de données de mesure de géométrie de surface 3D étant fusionnés de manière à obtenir une carte 3D complète d'une section endommagée du composant de câble.

12. Système selon la revendication 10 ou 11, ladite inspection comprenant la mesure de la rugosité de la surface balayée par le scanner de surface.

13. Système selon l'une des revendications 10 à 12, ladite inspection comprenant la mesure des aspérités comprises dans la surface balayée par le scanner de surface.
